# EUROPÄISCHE PATENTSCHRIFT

(11) **EP 1 420 888 B1**
(45) Veröffentlichungstag und Bekanntmachung des Hinweises auf die Patenterteilung: **08.06.2005**
(21) Anmeldenummer: 02767249.2
(22) Anmeldetag: 23.07.2002
(51) Int. Cl.: B03C 1/28, B03C 1/035, G01N 35/00

(54) **SYSTEM ZUR SEPARATION VON MAGNETISCH ANZIEHBAREN PARTIKELN**
SYSTEM FOR SEPARATING MAGNETICALLY ATTRACTABLE PARTICLES
SYSTEME DESTINE A LA SEPARATION DE PARTICULES POUVANT ETRE ATTIREES MAGNETIQUEMENT

(30) Priorität: 25.07.2001 DE 10136060
(43) Veröffentlichungstag der Anmeldung: 26.05.2004
(73) Patentinhaber: Roche Diagnostics GmbH, 68305 Mannheim (DE); F.HOFFMANN-LA ROCHE AG, 4070 Basel (CH)
(72) Erfinder: MUELLER, Hans-Juergen, 82347 Bernried (DE); HOLZER, Andreas, 82256 Fuerstenfeldbruck (DE)
(74) Vertreter: Isenbruck, Günter, Dr.
(86) Internationale Anmeldenummer: PCT/EP2002/008174
(87) Internationale Veröffentlichungsnummer: WO 2003/009943

(56) Entgegenhaltungen:
- WO-A-96/26011
- PATENT ABSTRACTS OF JAPAN vol. 011, no. 246 (C-439), 11. August 1987 (1987-08-11) & JP 62 053714 A (KAMATA BIO ENG KK), 9. März 1987 (1987-03-09)

## Beschreibung

Die vorliegende Erfindung fällt in das Gebiet der Analytik, insbesondere der klinischen und immunologischen Analytik unter Verwendung magnetisch anziehbarer Partikel.

Die Erfindung betrifft ein System zur Separation von magnetisch anziehbaren Partikeln, die in einer Flüssigkeit suspendiert sind, beinhaltend eine Magnetanordnung mit mindestens zwei ringförmigen Magneten, deren Magnetachse senkrecht zur Ringebene ausgerichtet ist, die Magnete gleichsinnig oder gegensinnig übereinander angeordnet sind und die Ringinnenräume eine Aufnahmeposition für ein Gefäß bilden. Die Erfindung betrifft ferner Verfahren zur Separation und Waschung magnetisch anziehbarer Partikel unter Verwendung eines solchen Systems, sowie ein System, das eine Bewegungsvorrichtung zur Suspendierung separierter Partikel besitzt.

Im Gebiet der chemischen Analyse hat sich eine Verwendung von magnetisch anziehbaren Partikeln bereits seit einiger Zeit etabliert. Die magnetisch anziehbaren Partikel werden dabei in erster Linie zur Abtrennung nachzuweisender Stoffe / Partikel aus der Probenmatrix eingesetzt. Hierzu werden die magnetisch anziehbaren Partikel so beschichtet, daß sie entweder direkt oder nach Reaktion mit Hilfssubstanzen nachzuweisendes Material auf ihrer Oberfläche binden. Bei diesen Prozessen ist es gewollt oder zwingend notwendig, nachzuweisende Substanz möglichst vollständig von der Probenmatrix zu trennen, damit spätere analytische Schritte nicht gestört werden. Eine Abtrennung der magnetisch anziehbaren Partikel von der Probenmatrix ist insbesondere wichtig, um die Partikel waschen zu können und so eine noch weitergehende Abtrennung der Probenmatrix zu erzielen.

In den Dokumenten US 5,827,478 und US 5,888,835 sind Anordnungen beschrieben, bei denen Magnetpartikel, die sich in Suspension befinden, durch Heranführen von Magneten an eine Gefäßaußenseite separiert werden. Überstehende Probenflüssigkeit wird aus dem Gefäß entfernt und die Partikel werden mit einer Reinigungsflüssigkeit gewaschen. Hierzu können die Partikel nach Abtrennung des Überstandes in einer Waschflüssigkeit suspendiert werden.

In den Dokumenten US 5,976,369 und US 5,897,783 sind Anordnungen beschrieben, bei denen Magnetpartikel durch einen magnetischen Dipol an der Innenwandung eines Gefäßes abgeschieden werden. Durch die Formgebung des magnetischen Jochs wird eine Separation erzielt, bei der die Partikel im wesentlichen in Form eines Ringes abgeschieden werden. Bei Verwendung eines Dipoles dieser Art ist jedoch die Ausbildung eines homogenen Ringes nicht möglich.

Aus der EP 0 479 448 ist weiterhin ein Separationsdevice bekannt, welches eine Magnetplatte mit Bohrungen aufweist, in die Gefäße mit darin enthaltenen suspendierten Magnetpartikeln eingebracht werden. Die Magnetplatte ist so beschaffen, daß die Nord-Süd-Achse parallel zur Achse der Bohrung angeordnet ist.

Im Dokument JP 62053714 ist eine Anordnung beschrieben, welche eine Mehrzahl von ringförmigen Magneten aufweist, deren Magnetachse senkrecht zur Ringebene ausgerichtet ist und deren Ringinnenräume einen Raum bilden. Bei dieser Anordnung sind die ringförmigen Magnete so angeordnet, dass die Magnete gleichsinnig übereinander angeordnet sind, also jeweils der Nordpol des einen Ringes an den Südpol des anderen Ringes angrenzt.

Im Rahmen der vorliegenden Erfindung wurde gefunden, daß Separationsanordnungen gemäß den o.g. Dokumenten zwar prinzipiell eine hinreichende Abtrennung ermöglichen, hinsichtlich ihrer Wascheffizienz jedoch verbesserungsbedürftig sind. Es wurde unter anderem gefunden, daß eine sehr starke, konzentrierte Abscheidung von Partikeln durchaus nachteilig sein kann, da die Partikel sehr dicht gepackt sind und auch häufig nach einem Resuspensierungsschritt noch dicht gepackte Cluster verbleiben. In diesen Fällen ist der Zwischenraum der Partikel nicht oder nur unzureichend für Waschflüssigkeiten zugänglich ist. Ein weiterer Nachteil einer intensiven, konzentrierten Abscheidung von Partikeln besteht darin, daß eine Resuspension der Partikel häufig nur unter hohem Aufwand möglich ist. Erfindungsgemäß wird ein System vorgeschlagen, bei dem die Partikel möglichst gleichmäßig auf einer relativ großen Innenfläche eines Gefäßes abgeschieden werden. In diesem Zustand ist sowohl ein effizientes Waschen oder Versetzen der Partikel mit einer Reaktionsflüssigkeit als auch eine relativ einfache Resuspendierung der Partikel möglich. Bei dem erfindungsgemäßen System und Verfahren wird die hier genannte vorteilhafte Abscheidung durch eine Anordnung von mindestens zwei ringförmigen Magneten erzielt, deren Magnetachse senkrecht zur Ringebene ausgerichtet ist und die Magnete gleichsinnig oder gegensinnig übereinander angeordnet sind, so daß der entstehende Ringinnenraum einen geeigneten Ort für eine magnetische Abscheidung bildet.

Magnetisch anziehbare Partikel im Sinne der vorliegenden Erfindung sind sowohl paramagnetische als auch vorzugsweise ferromagnetische Partikel. Bei den ferromagnetischen Partikeln werden magnetisch harte Substanzen, die nach Entfernen eines äußeren Magnetfeldes keinen oder nur einen geringen Restmagnetismus aufweisen, bevorzugt. Ein verbleibender Restmagnetismus würde eine vollständige Resuspendierung der Partikel schwieriger machen. Magnetisch anziehbare Mikropartikel zur Verwendung in der Analytik weisen typischerweise einen Durchmesser im Bereich weniger Mikrometer, vorzugsweise im Bereich von 1,5 - 4 µm auf. Derartige Partikel können im Handel beispielsweise von der Firma Dynal bezogen werden. Zur Verwendung im Rahmen der Analytik werden die Partikel im Regelfall mit Bindungspartnern beschichtet. Dies können sowohl Beschichtungen sein, die einen nachzuweisenden Analyten direkt binden als auch Universalbeschichtungen, wie z. B. Streptavidin. Durch Reaktion universal beschichteter Partikel mit Konjugaten aus einem Bindepartner für die Universalbeschichtung (beispielsweise Biotin) und einem Bindepartner für den Analyten, können spezifisch bindende Mikropartikel erzeugt werden. Da Herstellungsverfahren für Mikropartikel zur chemischen / immunologischen Analyse im Stand der Technik hinlänglich bekannt sind, wird an dieser Stelle nicht näher darauf eingegangen.

Zur Durchführung einer Analyse werden die Mikropartikel mit einer Probenflüssigkeit wie Blut oder Serum versetzt, damit nachzuweisende Analyten auf der Oberfläche der Mikropartikel binden können oder dort eine spezifische Reaktion hervorrufen. Sowohl Mikropartikel als auch Probenflüssigkeit können vor dem beschriebenen Reaktionsschritt anderweitigen Operationsschritten wie Suspendierung, Verdünnung, Aufschlußverfahren usw. unterworfen werden. Zur Durchführung einer Analyse ist es im Regelfall notwendig, den Teil der Probe, der nicht Analyt darstellt (Probenmatrix) möglichst vollständig abzutrennen, um eine Störung späterer Nachweisreaktionen zu vermeiden. Im Gebiet der Erfindung erfolgt dies durch Separation der magnetisch anziehbaren Partikel und Abtrennung der verbleibenden Flüssigkeit (im allgemeinen Sprachgebrauch auch Überstand genannt). Im Regelfall müssen die separierten Mikropartikel vor Durchführung weiterer Analyseschritte zunächst gewaschen werden, um anhaftende Flüssigkeit, die auch noch Probenmatrix enthält, zu entfernen. Ein solches Waschen kann erfindungsgemäß sowohl erfolgen während die Partikel abgeschieden sind als auch durch oder während die Partikel in Flüssigkeit suspendiert sind. Wie bereits weiter oben ausgeführt, zeichnet sich die vorliegende Erfindung dadurch aus, daß die Mikropartikel in einer Form abgeschieden werden, aus der sie besonders gut und ohne Beibehaltung größerer Aggregate resuspendiert werden können. Die Partikel können nunmehr auf verschiedenste Arten für eine Analyse eingesetzt werden.

Zur Durchführung einer Separation muß eine Suspension von magnetischen Mikropartikeln in das Wirkfeld der Magnetanordnung, d. h. im gegebenen Fall in den Innenraum der ringförmigen Magnete eingebracht werden. Dies kann in erster Linie dadurch erreicht werden, daß ein nichtmagnetisches Gefäß, in dem sich die Suspension befindet, in den durch die ringförmigen Magnete gebildeten Ringinnenraum eingeführt wird. Alternativ kann auch die Magnetanordnung so bewegt werden, daß das Gefäß mit der Suspension in den Innenraum eintaucht. Eine weitere Möglichkeit besteht dann, eine Magnetanordnung zu wählen, welche aus zwei oder mehr Teilen, vorzugsweise zwei Halbschalen, aufgebaut ist, welche zum Einführen eines Gefäßes auseinanderbewegt, das Gefäß in den gebildeten Innenraum gebracht und die Teile zum Anlegen des Magnetfeldes zusammengefahren werden.

Die ringförmigen Magnete einer erfindungsgemäßen Magnetanordnung können gleichsinnig oder gegensinnig übereinander angeordnet sein. Eine gegensinnige Orientierung führt zu stärkeren Magnetfeldgradieuten und somit zu einer rascheren Separation von Partikeln. Wie jedoch bereits oben ausgeführt, ist eine Verringerung der Separationszeit zwar prinzipiell günstig, um den Zeitbedarf für den Analyseprozeß zu senken, jedoch auch häufig mit einem schwieriger zu resuspendierenden Partikelkuchen verbunden. Wird eine Anordnung mit gegensinnig angeordneten Magneten gewählt, so ist es vorteilhaft, eine Haltevorrichtung vorzusehen, die die Magnete gegen die Abstoßung zusammenhält. Sowohl bei gleichsinniger als auch bei gegensinniger Orientierung der Magnete können Abstandshalter zwischen den Einzelmagneten vorgesehen werden, die aus nicht-magnetischem Material bestehen. Durch Auswahl der Abstandshalter, insbesondere ihrer Dicke, kann die Intensität und räumliche Verteilung des Magnetfeldes auf einfachere Weise modifiziert werden. So ist es einfach möglich, die Magnetanordnung den jeweiligen Erfordernissen anzupassen.

Für das Gebiet der Erfindung wurde gefunden, daß der Ringinnenraum, in den ein Gefäß zur Separation eingeführt wird, vorzugsweise einen Querschnitt im Bereich zwischen 4 und 10 mm aufweisen sollte. Von Vorteil ist es weiterhin, wenn die einzelnen, für die Magnetanordnung verwendeten Magnete eine magnetische Remanenz von größer als 0,8 T aufweisen. Derartige Ringmagnete können beispielsweise über die Firma Bomatec, Höri in der Schweiz erhalten werden. Im Rahmen der Erfindung sind kreisringförmige Magnete bevorzugt, da mit ihnen eine homogene Separation der Partikel an der Gefäßinnenwandung erzielt werden kann. Es sind jedoch prinzipiell auch Magnete mit anderen, ringförmig geschlossenen Magneten, z.B. in Gestalt eines Vierecks oder Vielecks, möglich. Ringinnenraum und Gefäßaußenfläche sind vorzugsweise so aneinander angepaßt, daß zwischen Magnetinnenwandung und Gefäßaußenwand ein Spalt von vorzugsweise 0 bis 1,5 mm, besser noch unter 0,5 mm verbleibt, wenn das jeweilige Gefäß konzentrisch in die Ringmagneten eingeführt ist.

Im Rahmen der vorliegenden Erfindung wurde auch eine Vorrichtung zur Resuspension von abgeschiedenen Mikropartikeln gefunden, die vorteilhaft in einem System zur Separation mit erfindungsgemäßer Magnetanordnung eingesetzt werden kann.

Die Vorrichtung zur Suspendierung abgeschiedener Mikropartikel besitzt eine Gefäßhalterung zur Aufnahme eines Gefäßes. Die Gefäßhalterung wird zur Suspendierung von Partikeln mit einer Bewegungsvorrichtung bewegt. Vorzugsweise ist die Gefäßhalterung so gelagert, daß sie in einer Weise bewegt werden kann, bei der die Gefäßachse gegenüber dem Lot verkippt wird. Eine solche Lagerung kann beispielsweise durch eine Gefäßhalterung mit einer äußeren Fläche in Form eines Kugelsegmentes erreicht werden, welches in einem entsprechenden Hohlraum, der eine Vertiefung in Form einer Teilkugel aufweist, gehaltert wird. Eine Bewegung der Gefäßhalterung kann durch eine mechanische Verbindung mit einem Exzenterantrieb erfolgen.

Die vorliegende Erfindung wird anhand von Figuren näher erläutert:
Figur 1: Magnetordnung in perspektivischer Ansicht
Figur 2: Verfahrensschritte zum Waschen von Mikropartikeln unter Verwendung der in Figur 1 dargestellten Magnetanordnung
Figur 3: Schematische Darstellung von Magnetanordnungen im Querschnitt
Figur 4: Modul zur Separation und Resuspendierung von Mikropartikeln

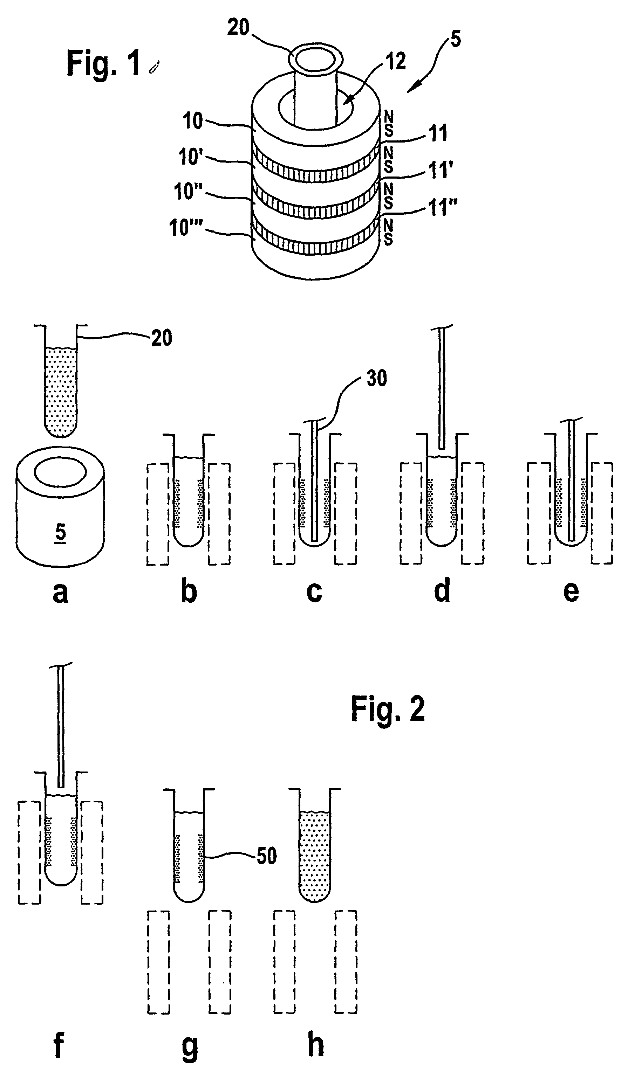

Figur 1 zeigt eine perspektivische Darstellung einer erfindungsgemäßen Magnetanordnung, bei der vier Ringmagnete (10, 10', 10", 10''') übereinander angeordnet sind. Die Magnetachse der Ringmagneten ist senkrecht zur Ringebene ausgebildet. Zwischen den Ringmagneten befinden sich Abstandshalter (11, 11', 11"). Die Abstandshalter bestehen aus einem nicht-magnetischen Material, beispielsweise einem Kunststoff. Durch die Innenräume der übereinander angeordneten Ringmagnete wird ein Innenraum (12), zur Aufnahme eines Probengefäßes (20) gebildet. In der dargestellten Anordnung sind die Ringmagnete gleichsinnig angeordnet, so daß ihre Nord-Süd-Achse in die gleiche Richtung weist.

In Figur 2 sind schematisch die einzelnen Verfahrensschritte zur Waschung von Mikropartikeln mit Hilfe der in Figur 1 dargestellten Magnetanordnung gezeigt. In Figur 1a ist die Magnetanordnung perspektivisch dargestellt, während die übrigen Figuren Querschnittszeichnungen sind.

Zunächst wird ein Gefäß mit darin suspendierten Mikropartikeln in den Aufnahmeraum (12) der Magnetanordnung (5) eingebracht (Figuren a und b). Sobald die Mikropartikel durch das Magnetfeld an der Innenwandung des Gefäßes abgeschieden sind, wird die im Gefäß nunmehr getrennt von den Mikropartikeln vorliegende Flüssigkeit mit einer Pipette (30) entnommen (Figur c). Nunmehr wird Waschflüssigkeit zugegeben (Figur d) und diese wiederum aus dem Gefäß abpipettiert (Figur e). Das Gefäß wird wieder mit Waschflüssigkeit gefüllt (Figur f) und Gefäß und Magnetanordnung räumlich voneinander getrennt (Figur g). Nunmehr wird der abgeschiedene Kuchen (50) von Mikropartikeln durch Bewegen des Gefäßes in der Flüssigkeit suspendiert (Figur h). Alternativ zu dem dargestellten Verfahren kann auch ein Einfüllen von Flüssigkeit zum Resuspendieren abgeschiedener Mikropartikel verwendet werden, wozu jedoch auch zuvor der Einfluß des Magnetfeldes entfernt wird. Der Prozeß der Schritte a bis h kann, falls notwendig, wiederholt werden. Zur Steigerung der Wascheffizienz ist es ferner möglich, nach dem Schritt f mit Schritt c unter Verwendung neuer Waschflüssigkeit anzuschließen. Die Sequenz c bis f kann so oft wie gewünscht / erforderlich wiederholt werden.

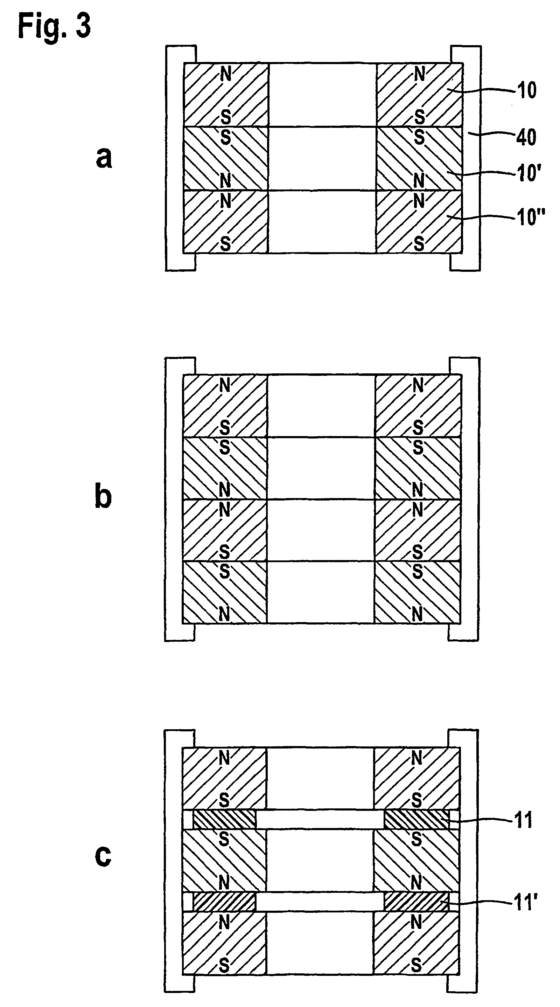

Figur 3 zeigt drei verschiedene Magnetanordnungen. In Figur 3a ist eine Anordnung dargestellt, bei der drei Ringmagnete in gegensinniger Polarität durch eine Klammer (40) zusammengehalten werden. In Figur 3b ist eine entsprechende Anordnung mit 4 gegensinnig angeordneten Ringmagneten dargestellt. Figur 3c zeigt schließlich eine Anordnung, bei der sich zwischen den Ringmagneten Abstandshalter (11, 11') befinden.

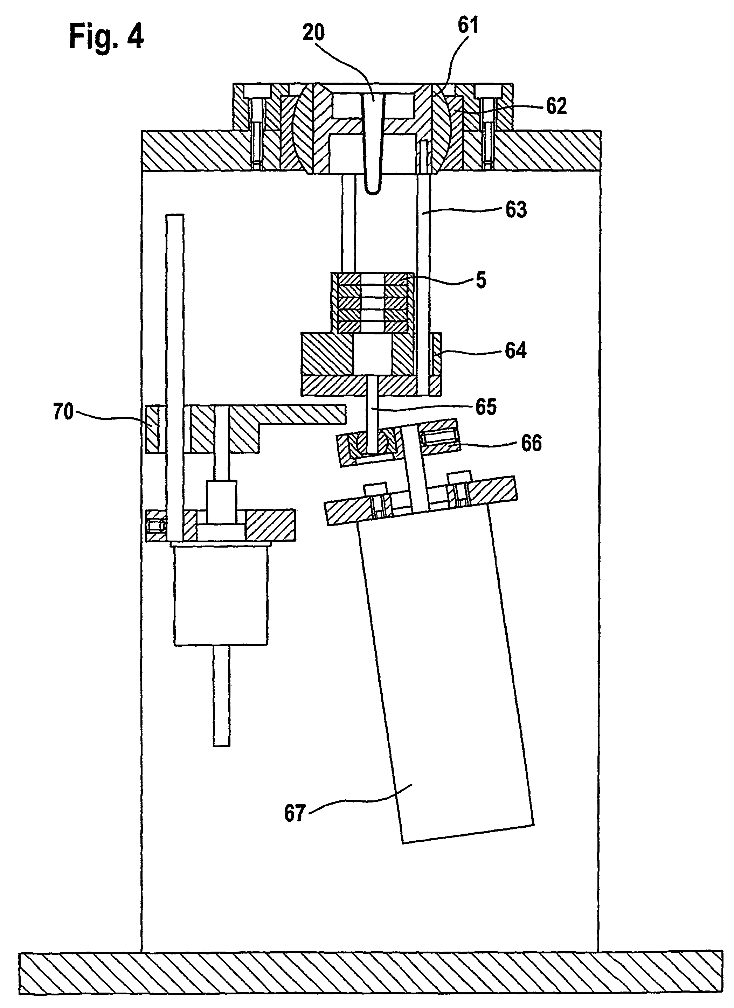

Figur 4 zeigt ein System, das sowohl zur magnetischen Separation von Mikropartikeln als auch zur Resuspension abgeschiedener Mikropartikel in Flüssigkeiten geeignet ist. Bei dieser Anordnung befindet sich ein Gefäß in einer Halterung (61), welche die Außenform einer Teilkugel aufweist. Die Teilkugel ist in einer stationären, in ihrer der Halterung angepaßten Form (62) gehaltert. Die Halterung ist in der Form so angeordnet, daß eine Bewegung erfolgen kann, mit welcher die Längsachse des Gefäßes gegenüber der Lotrechten verkippt wird. Hierzu weist die Halterung Verbindungsstangen (63) auf, die mit einer Bewegungsplatte (64) verbunden sind. Die Bewegungsplatte hat an ihrer Unterseite ebenfalls eine Verbindungsstange (65), welche durch eine Exzenterscheibe (66) in eine Taumelbewegung versetzt wird. Hierzu wird die Exzenterscheibe (66) über einen Motor (67) in Rotation versetzt. Auf der Bewegungsplatte (64) ist weiterhin eine Magnetanordnung (5) gemäß Figur 1 angeordnet. Die Bewegungsplatte kann über eine Hubvorrichtung (70) entlang der Verbindungsstangen (63) nach oben bewegt werden, so daß das Gefäß in den durch die Magnete gebildeten Innenraum eintaucht. Mit dieser Anordnung kann zunächst ein Separationsprozeß durchgeführt werden, bei dem ein Gefäß in die Aufnahmeposition eingestellt wird und die Magnetanordnung (5) bereits so angeordnet ist, daß ein unterer Bereich des Gefäßes in ihren Innenraum eintaucht oder aber die Magnetanordnung kann über die Hubvorrichtung (70) nach oben gefahren werden, um eine Separation von Partikeln zu bewirken. Die in Figur 2 dargestellten Schritte b bis f können nunmehr in dieser Position durchgeführt werden. Zur Resuspension wird die Magnetanordnung (5) in ihre untere Position, welche in Figur 4 dargestellt ist, verfahren, und das Gefäß mit seinem Inhalt durch die Exzenteranordnung in Bewegung versetzt, so daß eine Resuspendierung der Mikropartikel erfolgt.

## Patentansprüche

1. System zur Separation von magnetisch anziehbaren Mikropartikeln, die in einer Flüssigkeit suspendiert sind, beinhaltend eine Magnetanordnung (5) mit mindestens zwei ringförmigen Magneten (10, 10', 10", 10'''), deren Magnetachse senkrecht zur Ringebene ausgerichtet ist und deren Ringinnenräume einen Raum (12) zur Aufnahme für ein Gefäß (20) bilden,
**dadurch gekennzeichnet, dass** die Magnete (10, 10', 10", 10''') gegensinnig übereinander angeordnet sind.

2. System gemäß Anspruch 1, bei dem die ringförmigen Magnete durch eine Haltevorrichtung (40) entgegen der magnetischen Abstoßung zusammengehalten werden.

3. System gemäß Anspruch 1, bei dem sich zwischen den ringförmigen Magneten Abstandshalter (11, 11', 11") aus nichtmagnetischem Material befinden.

4. System gemäß Anspruch 1, bei dem der Ringinnenraum der Magnete einen Querschnitt im Bereich zwischen 4 mm bis 10 mm besitzt, wobei die einzelnen Magnete vorzugsweise eine magnetische Remanenz größer als 0,8 Tesla aufweisen.

5. System gemäß Anspruch 1, das ein Gefäß (20) zur Aufnahme einer Suspension von Mikropartikeln beinhaltet und bei dem die suspendierten Mikropartikel vorzugsweise mit einem immunologischen Bindepartner beschichtet sind und gegebenenfalls einen mittleren Durchmesser im Bereich von 1,5 bis 4 µm aufweisen.

6. Verfahren zur Separation von magnetischen Mikropartikeln bei dem ein Gefäß (20) mit einer Suspension von Mikropartikeln in die Aufnahmeposition eines Systems beinhaltend eine Magnetanordnung (5) mit mindestens zwei ringförmigen Magneten (10, 10', 10'', 10'''), deren Magnetachse senkrecht zur Ringebene ausgerichtet ist und deren Ringinnenräume einen Raum (12) zur Aufnahme für ein Gefäß (20) bilden, eingebracht wird, so daß sich die Mikropartikel an der Gefäßinnenwandung abscheiden und eine erste Flüssigkeit zurückbleibt, **dadurch gekennzeichnet, dass** die Magnete (10, 10', 10'', 10''') gegensinnig übereinander angeordnet sind.

7. Verfahren gemäß Anspruch 6, bei dem nach der Separation die erste Flüssigkeit entnommen, die Wirkung des Magnetfeldes aufgehoben, eine zweite Flüssigkeit zugegeben und die Mikropartikel in der zweiten Flüssigkeit suspendiert werden, wobei nach dem Suspendieren vorzugsweise eine erneute Abscheidung (50) der Partikel erfolgt.

8. Verfahren gemäß Anspruch 6, bei dem nach Abscheidung (50) der Mikropartikel an der Gefäßinnenwandung eine zweite Flüssigkeit zugegeben wird, während die Mikropartikel an der Gefäßinnenwandung verbleiben und die zweite Flüssigkeit entnommen wird.

9. System gemäß Anspruch 1, zusätzlich enthaltend eine Gefäßhalterung (61) und eine Bewegungsvorrichtung zur Bewegung eines Gefäßes (20) in der Gefäßhalterung (61) um eine Suspendierung separierter Mikropartikel zu erzielen.

10. System gemäß Anspruch 9, bei dem das Gefäß (20) zur Separation und Resuspension in der gleichen Position verbleibt und die Magnetanordnung (5) durch eine Vorrichtung (70) aus einer Separationsposition in eine Suspensionsposition bewegt werden kann, in der die Wirkung der Magnetanordnung (5) auf den Gefäßinhalt so gering ist, daß eine Suspendierung der Mikropartikel erfolgen kann, wobei die Gefäßhalterung (61) vorzugsweise über einen Exzenter (66) bewegt wird.

## Claims

1. System for the separation of magnetically attractable microparticles that are suspended in a liquid, said system containing a magnet arrangement (5) with at least two ring-shaped magnets (10, 10', 10'', 10'''), whose magnetic axis is aligned perpendicular to the plane of the ring and whose annular cavities form a space (12) for accommodating a vessel (20), **characterised in that** the magnets (10, 10', 10'', 10''') are arranged in opposite magnetic polarity above one another.

2. System according to claim 1, in which the ring-shaped magnets are held together by means of a holding device (40) against their magnetic repulsion.

3. System according to claim 1, in which spacers (11, 11', 11'') of non-magnetic material are located between the ring-shaped magnets.

4. System according to claim 1, in which the annular cavity of the magnets has a cross-section in the range between 4 mm and 10 mm, the individual magnets preferably having a magnetic remanence of greater than 0.8 Tesla.

5. System according to claim 1, which includes a vessel (20) for receiving a suspension of microparticles and in which the suspended microparticles are preferably coated with an immunological binding partner and optionally have a mean diameter in the range from 1.5 to 4 µm.

6. Process for the separation of magnetic microparticles, in which a vessel (20) with a suspension of microparticles is introduced into the accommodation position of a system containing a magnet arrangement (5) with at least two ring-shaped magnets (10, 10', 10'', 10''') whose magnetic axis is aligned perpendicular to the plane of the ring and whose annular cavities form a space (12) for receiving a vessel (20), so that the microparticles are deposited on the inner wall of the vessel and a first liquid remains behind, **characterised in that** the magnets (10, 10', 10'', 10''') are arranged above one another in opposite magnetic polarity.

7. Process according to claim 6, in which after the separation the first liquid is removed, the action of magnetic field is cancelled, a second liquid is added and the microparticles are suspended in the second liquid, wherein after the suspension a renewed deposition (50) of the particles preferably takes place.

8. Process according to claim 6, in which after deposition (50) of the microparticles on the inner wall of the vessel a second liquid is added, during which the microparticles remain on the inner wall of the vessel and the second liquid is removed.

9. System according to claim 1, containing in addition a vessel holder (61) and a movement device for moving a vessel (20) in the vessel holder (61) in order to achieve a suspension of separated microparticles.

10. System according to claim 9, in which the vessel (20) for the separation and resuspension remains in the same position and the magnet arrangement (5) can be moved by a device (70) from a separation position into a suspension position, in which the action of the magnet arrangement (5) on the vessel contents is so slight that a suspension of the microparticles can take place, the vessel holder (61) preferably being moved by means of an eccentric (66).

## Revendications

1. Système pour séparer des microparticules pouvant être attirées magnétiquement, qui sont suspendues dans un liquide, contenant une disposition d'aimants (5) avec au moins deux aimants de forme annulaire (10, 10', 10", 10"'), dont l'axe magnétique est orienté perpendiculairement au plan des anneaux et dont les espaces intérieurs annulaires forment un espace (12) pour recevoir un récipient (20),
**caractérisé en ce que** les aimants (10, 10', 10", 10''') sont disposés l'un sur l'autre en sens inverse.

2. Système selon la revendication 1, dans lequel les aimants de forme annulaire sont retenus ensemble à l'aide d'un dispositif support (40) contre la répulsion magnétique.

3. Système selon la revendication 1, dans lequel des entretoises (11, 11', 11") constituées de matière non magnétique se trouvent entre les aimants de forme annulaire.

4. Système selon la revendication 1, dans lequel l'espace intérieur annulaire des aimants possède une section transversale dans la plage comprise entre 4 mm jusqu'à 10 mm, les aimants individuels présentant de préférence une rémanence magnétique supérieure à 0,8 Tesla.

5. Système selon la revendication 1, qui contient un récipient (20) pour recevoir une suspension de microparticules, et dans lequel les microparticules suspendues sont revêtues de préférence d'un partenaire de liaison immunologique, et présentent éventuellement un diamètre moyen dans la plage de 1,5 à 4 µm.

6. Procédé pour séparer des microparticules magnétiques dans lequel un récipient (20) avec une suspension de microparticules est introduit dans la position réceptrice d'un système contenant une disposition d'aimants (5) ayant au moins deux aimants de forme annulaire (10, 10', 10", 10"'), dont l'axe magnétique est dirigé perpendiculairement au plan des anneaux et dont les espaces intérieurs annulaires forment un espace (12) pour recevoir un récipient (20) de sorte que les microparticules se déposent sur la paroi intérieure du récipient, et qu'un premier liquide subsiste, **caractérisé en ce que** les aimants (10, 10', 10", 10"') sont disposés l'un sur l'autre en sens inverse.

7. Procédé selon la revendication 6, dans lequel le premier liquide est retiré après la séparation, l'effet du champ magnétique est annulé, un deuxième liquide est ajouté, et les microparticules sont mises en suspension dans le deuxième liquide, un nouveau dépôt (50) des particules se réalisant de préférence après la mise en suspension.

8. Procédé selon la revendication 6, dans lequel un deuxième liquide est ajouté après dépôt (50) des microparticules sur la paroi intérieure du récipient, tandis que les microparticules restent sur la paroi intérieure du récipient et le deuxième liquide est retiré.

9. Système selon la revendication 1, contenant en plus un porte-récipient (61) et un dispositif de déplacement pour déplacer un récipient (20) dans le porte-récipient (61) afin d'obtenir une mise en suspension de microparticules séparées.

10. Système selon la revendication 9, dans lequel le récipient (20) pour la séparation et la remise en suspension, reste dans la même position, et la disposition d'aimants (5) peut être déplacée à l'aide d'un dispositif (70) à partir d'une position de séparation vers une position de suspension, dans laquelle l'effet de la disposition d'aimants (5) sur le contenu du récipient est tellement faible qu'une mise en suspension des particules peut se réaliser, le porte-récipient (61) étant mû de préférence par l'intermédiaire d'un excentrique (66).
